# EUROPEAN PATENT SPECIFICATION

(11) **EP 0 714 855 B1**
(45) Date of publication and mention of the grant of the patent: **20.10.1999**
(21) Application number: 94500177.4
(22) Date of filing: 28.11.1994
(51) Int. Cl.: C02F 1/52

(54) **Flocculant for treating waste water**
Flockungsmittel zur Abwasserbehandlung
Floculant pour le traitement d'eau usée

(43) Date of publication of application: 05.06.1996
(73) Proprietor: ASKA PLANNING CO. LTD., Tokyo 150 (JP)
(72) Inventor: Ogawa Koji, Tokio (JP)
(74) Representative: De la Fuente Fernandez, Dionisio

(56) References cited:
- EP-A- 0 159 178
- DATABASE WPI Week 8625, Derwent Publications Ltd., London, GB; AN 86-158686 & JP-A-61 090 798 (IJICHI) 8 May 1986

## Description

### BACKGROUNG OF THE INVENTION

The present specification refers to a patent of invention related to a flocculant for treating waste water, the evident purpose of which is to be used in the treatment of organic and inorganic waste water resulting from building works and factories.

### FIELD OF THE INVENTION

This invention applies to the industry dedicated to the treatment of waste water.

### RELATED ART

The conventional flocculants can be classed as organic and inorganic.

The main composition of the organic flocculants is based on organic macromolecules producing a large size of coagulation, but, nevertheless, both the water and the slag produced by the treatment have a viscous nature, which, when used later in dehydration processes, can cause problems, apart from the fact that the organic substance can contaminate the microbial environment.

On the other hand, it has been confirmed that the organic flocculants substantially alter the pH of the treated water, and, - therefore, the water requires later a neutralization process which will require a downtime within the neutralization tank, and of course it is not convenient to use organic flocculents for treating - continuous flows of waste water.

In relation to the inorganic flocculants, it is to be pointed out thet they use mainly the coagulant force arosen from the aluminim ion and the segregability of the treated water is good, although, nevertheless, the coagulation potency is markedly lower than that of the organic flocculants, and it has been checked that the inorganic flocculents reduce the pH value, so requiring a neutralization process prior to the waste operation to the sewer system.

An evident solution to the present problems as regards this matter would be to rely on a flocculant configured so that it could solve, in an adequate way, the above-mentioned problems, and that, in turn, said flocculant could not be altered by the organic and inorganic substances contained in the waste water, so avoiding also the possible generation of coagulations having a same size and force then those checked in the organic flocculant with a few addition of same, and it being desirable that this flocculant can produce a positive sedimentary effect and does not require a neutralization treatment before releasing the water to the sewer system. EP-A-0 159 178 and JP-A-61090798 are prior art documents concerned with the use of flocculants.

Nevertheless, up to now nothing is known about the existence of a flocculant having features which could be considered as suitable.

### SUMMARY OF THE INVENTION

The flocculant for treating waste water, as proposed by the invention, constitutes per se a clear novelty in the industrial area in which it is incorporated, since starting from it, it is possible to have a flocculant qualified to carry out waste water treatments, independently of the fact that this water can be an organic or inorganic waste water resultant from building works or industrial plants.

In a more definite way, the flocculant for treating waste water which is the subject matter of the invention, is constituted - starting from a suitable admixture and bonding of aluminium sulfate, calcium sulfate, alkaline metallic carbonate, and cement particles, to which particles of zeolite and/or cation coagulant are added.

The main materials composing the envisaged flocculant are as follows, namely:
- A flocculant containing 20-40 parts in weight of aluminium sulfate.
- A flocculant containing 30-60 parts in weight of calcium sulfate.
- Two thirds in weight of alkaline metallic carbonate as sodium carbonate, which controls the water treated between 5-9 pH, over the weight of the aluminium sulfate.
- 5-15 parts in weight of particulate cement, as coagulant.

It should be pointed out that if the content of aluminium sulfate is less than 20 parts in weight, it will lose its coagulant effect, and if greater than 40 parts in weight, the treated water will become cloudy.

Assuming that the calcium sulfate has less than 30 parts in weight, the coagulation diameter will be excessively small, and, consequently, the water will become more and more cloudy, while the content of the calcium sulfate will increase up to 60 parts in its weight.

In short, starting from this flocculant, it is possible to have an efficient coagulant for the waste water with organic and/or inorganic materials, which allows the treated water to pass directly to the sewer system without the need of performing a previous neutralization process on the water.

The flocculant is constituted as mentioned above, starting from 20-40 parts in weight of aluminium sulfate, as well as 30-60 parts in weight of calcium sulfate, and about two thirds in weight of alkaline metallic carbonate over the weight of the aluminium sulfate, as pH controller, having also 5-15 parts of cement in particles as coagulant, in which between 5-20 parts in - weight of zeolite and between 1-30 parts in weight of cation, both in particles, are evenly mixed.

### DETAILED DESCRIPTION OF THE PREFERRED EMBODIMENT

As mentioned above, the invention contemplates an adequate flocculant which can solve the current problems posed at the present time which have been encountered in the conventional flocculants used now, so obtaining a flocculant having characteristics impeding the fact that itself can be altered both by organic substances and inorganic substances which could be contained in the waste water, avoiding coagulations having the same size and force than those encountered in organic flocculents with a few additions of same, having a good sedimentary effect and not requiring a neutralizing treatment for the previously treated water, before releasing same again toward the sewer system.

In synthesis, the invention shapes, such as mentioned above, a flocculent containing 20-40 parts in weight of aluminium sulfate, being also provided with 30-60 parts in weight of calcium sulfate.

To the above mentioned elements, two third in weight of alkaline metallic carbonate, as sodium carbonate, are added, in order to control the treated water between 5-9 pH, over the aluminium sulfate weight, and 5-15 parts in weight of cement in particles, as coagulant.

If the content of aluminium sulfate is less than 20 parts in weight, the coagulating effect will be loss, and, if the content is larger than 40 parts in weight, the treated water will become cloudy.

When only main materials are used, small coagulations will occur, and floating microparticles will be probably encountered, which will muddy the treated water.

In order to avoid the above-mentioned problems, said particles of zeolite are added to the main material, and then they form coagulation nuclei, and, consequently, they activate the coagulation, producing solid and large configurations, which increase the capacity of the liquid and solid segregation in the dehydration process.

Apart from that, the zeolite capacity diminishes the sulfate - and calcium ions, which increase while the coagulation reaction is being carried out.

That is to say, while the amount of aluminium sulfate and calcium sulfate increases, the water surface becomes cloudy, but, nevertheless, when zeolite is added, the rest being of the same composition, the water surface does not become cloudy.

In synthesis, the content of zeolite in particles is 5-20 parts in weight, and, preferably, 8-15 parts in weight.

If the cation flocculent of macroparticles is added to the main material,a good result is obtained, even though the water contains organic substances, and, besides, a good performance can be obtained even though the waste water is inorganic.

If organic and inorganic materials are mixed, the performace is also very good, but it has been proved that said substante avoids the ion sulfate of water to become a negative loss due to an increase of pH (pH higher than 9), the adequate pH being kept for a long time in order to increase the aluminium sulfate coagulability, and to achieve a raising in the coagulation force, together with its capacity as an organic flocculent.

Furthermore, it is to be noted that, in the above case, the presence of zeolite protects an excess descent oh pH by the cation flocculant, and, consequently, we believe that it would be possible to admix a greater amount of cation polymers.

Also, an effect could be attained with a part of the cation polymer weight up to a maximum of 30 parts in weight, but, nevertheless, the water separation is intensely reduced, and it is recommended to utilize a great amount of the cation flocculant in very specific and particular cases.

In tests carried out, the flocculent was formed on the basis of 30 parts in weight of aluminium sulfate, 50 parts in weight of calcium sulfate, and 20 parts in weight of sodium carbonate, 10% of portland cement, 10% of zeolite in particles, and other 10% of a coagulant of cation organic macromolecules being added to the resultant 100 parts.

In the test number 1, to 11 parts of a solution of 100 ppm of red ochre of the Okinawa province (containing mainly ferric oxide and with a minimal amount of ferrosulfide), said 200 ppm flocculant is added

The result obtained is shown in the following determination, namely:

| | Coagulation diameter | Water clearness |
|---|---|---|
| Invented | Large | Colourless transparent |
| Coagulant A | Very small | Numerous floating elements |
| Coagulant B | Small | There are floating elements |
| Coagulant C | Large | Yellowish transparent |

The coagulant A is obtained with the coagulant of the invention, eliminating the zeolite particles and the cation flocculant, while in the coagulant B the cation flocculant is eliminated, and in the coagulant C the zeolite is the eliminated element.

There are no particles on the treated water surface, and its - transparence is very high, the flocculant diameter being 2-3 mm.

In a second test, the flocculants are added to one liter of a solution of 1000 ppm black earth, this black earth being mixed with disturbed earth and organic manures until the coagulations are visible.

The result of the coagulation is as follows:

In a product configured as coagulant A, provided with the above mentioned features, the measured amount added in mg/l is 2,500, the filtered water being poorly obtained, the coagulation diameter being less than 1 mm, no sedimentation being shown (cm/s), and the amount of concentrated mud measured in millimeters is not shown either, a pH 6 being lastly obtained.

Nevertheless, with the product of this invention, the measured amount added in mg/l is 60, the filtered water being well shown, the coagulation diameter being 4-5 mm, and the sedimentation velocity measured in cm/s being 0.52.

With regard to the amount of concentrated mud measured in ml, it must be pointed out that the obtained amount is 70, after 60 s. the pH being 7.

In a third test, both the coagulant B and the coagulant of the invention are added, until the flocculants are visually shown in a liter of waste water, this waste water having been extracted from the building site of the Taishi bridge foundation, which contains bentonite and CMC.

The result of the coagulation has been checked in coagulant A as 2,000 in the added amount measured in mg/l, the filtered water being good, having a coagulation diameter of 1-2 mm and a good condition, while the sedimentation velocity measured in cm/s is 0.571, the amount of concentrated mud measured in ml being lastly 80 after 51 seconds with a pH 8.

In relation to the product of the invention, the added amount measured in mg/l is 40, while the filtered water is good, the coagulation diameter is 2-3 mm and of a good condition, the sedimentation velocity measured in cm/s is 0.625, and the amount of concentrated mud measured in ml is 75 after 4o seconds with a pH 7.

When the added amount of the product of this invention is increased to 80 mg, a result identical to that of 40 mg is obtained, and with 100 mg a like result is also obtained, except for the water, which shows a whitish appearance.

The coagulant referenced A is suitable for a continuous treatment of waste water, a limit of 75-200% of the appropiate amount having been determined, this amount being estimated by a test tube, but, nevertheless, such as shown above on the lines of the results obtained, its utilization is not convenient, since the required - amount is very high.

On the contrary, the product of the invention can correcly react with an amount on the order of 75 to 250% in a continuous treatment of waste water, since its density varies every instant.

Nevertheless, when 200% of the adequate amount is surpassed, the treated water becomes whitish as above mentioned.

In a possible embodiment, that is to say, a variation of the water quality after the above explained treatment, 95% of DBO, 96,3% of DQO, and 99.9% of SS were eliminated.

Before treating the DBO with an electrode of separated diaphrams JISKO102.21 and 32.3, a result of 59% was obtained.

Before treating the DQO with the method KMmO sub4 at 100^{º}C JISKO102.17, a result of 470 was obtained.

Before treating the SS, by a weight measurement through the standard 59 (1971), a result of 14,000 was obtained.

The pH obtained with a glass electrode JISKO102.12 was 7.4 (24).

Nevertheless, after treating the DBO, the resul was 3, while the result obtained on the DQO was 17, and in SS, 12; a pH 7.9 (23) being shown.

In short, the present invention contemplates a product which is efficently usable for the treatment of organic and/or inorganic - water with a minimal amount, which is a substantial economic advantage, and the coagulation diameter in same being shown as large and facilitating the water separation, and it can be used in a wide limit such as 40-80 mg/l.

With the flocculant of the invention, the pH of the treated water varies only slightly, and by adjusting the rate of the aluminium sulfate and sodium carbonate, the value of a neutral pH of the treated water could be always obtained.

Furthermore, the content of the organic agent of the flocculant of the invention is very lower, for which the quality of the treated water is good, since the content of organic materials in the treated water is lower than with a conventional flocculant, of organic type, and consequently it has less effect on the environment.

## Claims

1. A flocculant for treating waste water, characterized in that it is constituted starting from aluminium sulfate in a ratio on the order of between 20-40 parts of its total weight, 30-60 parts in weight of calcium sulfate, 2/3 parts in weight of alkaline metallic carbonate over the weight of the aluminium sulfate, as pH controller, and 5-15 parts in weight of cement in particles as coagulant, in - which between 5-20 parts in weight of zeolite in particles are evenly mixed.

2. A flocculant for treating waste water, according to claim 1, characterized in that it is constituted by aluminium sulfate in an amount on the order of between 20-40 parts in weight, 30-60 parts in weight of calcium sulfate, 2/3 parts in weight of alkaline metallic carbonate over the weight of the aluminium sulfate, as pH controller, and 5-15 parts in weight of cement in particles as coagulant, in which between 5-20 parts in weight of zeolite and 1-30 parts in weight of cation both particles are evenly mixed.

3. A flocculant for treating waste water, according to claim 1, characterized in that it contains 20-40 - parts in weight of aluminium sulfate, 30-60 parts in weight of - calcium sulfate, about 2/3 parts in weight of alkaline metallic carbonate over the weight of the aluminium sulfate, as pH controller, and 5-15 parts in weight of cement in particles as coagulant, in which between 5-12 parts in weight of zeolite and between 1-30 parts in weight of cation, both in particles, are evenly mixed.

4. A flocculant for treating waste water, according to any of the preceding claims, characterized in that in the flocculant, 30 parts in weight of some are evenly mixed with aluminium sulfate, 50 parts of calcium sulfate, and 20 ports in weight of sodium - carbonate, adding 10 parts of cement, 10 parts in weight of zeolite in particles, and 10 parts in weight of a cation type coagulant.

## Patentansprüche

1. Flockungsmittel für die Aufbereitung von Abwasser, dadurch gekennzeichnet, dass es zu einem Anteil von 20-40 Gewichtsteilen von seinem Gesamtgewicht aus Aluminiumsulfat besteht, zu 30-60 Gewichtsteilen aus Kalziumsulfat, zu 2/3 Gewichtsteilen aus alkalischem Metallcarbonat bezogen auf das Gewicht des Aluminiumsulfats als pH-Regler und zu 5-15 Gewichtsteilen aus Zement in Form von Partikeln als Koaguliermittel, mit dem gleichmässig 5-20 Gewichtsteile Zeolith in Form von Partikeln vermischt werden.

2. Flockungsmittel für die Aufbereitung von Abwasser nach Anspruch 1, dadurch gekennzeichnet, dass es zu einem Anteil von 20-40 Gewichtsteilen aus Aluminiumsulfat besteht, zu 30-60 Gewichtsteilen aus Kalziumsulfat, zu 2/3 Gewichtsteilen aus alkalischem Metallcarbonat bezogen auf das Gewicht des Aluminiumsulfats als pH-Regler und zu 5-15 Gewichtsteilen aus Zement in Form von Partikeln als Koaguliermittel, mit dem gleichmässig 5-20 Gewichtsteile Zeolith und 1-30 Gewichtsteile Kationen, beide in Form von Partikeln, vermischt werden.

3. Flockungsmittel für die Aufbereitung von Abwasser nach Anspruch 1, dadurch gekennzeichnet, dass es zu einem Anteil von 20-40 Gewichtsteilen aus Aluminiumsulfat besteht, zu 30-60 Gewichtsteilen aus Kalziumsulfat, zu ungefähr 2/3 Gewichtsteilen aus alkalischem Metallcarbonat bezogen auf das Gewicht des Aluminiumsulfats als pH-Regler und zu 5-15 Gewichtsteilen aus Zement in Form von Partikeln als Koaguliermittel, mit dem gleichmässig 5-12 Gewichtsteile Zeolith und 1-30 Gewichtsteile Kationen, beide in Form von Partikeln, vermischt werden.

4. Flockungsmittel für die Aufbereitung von Abwasser gemäss irgendeinem der vorhergehenden Ansprüche, dadurch gekennzeichnet, dass in dem Flockungsmittel 30 Gewichtsteile desselben gleichmässig mit Aluminiumsulfat vermischt werden, mit 50 Gewichtsteilen Kalziumsulfat und 20 Gewichtsteilen Natriumkarbonat, wobei 10 Gewichtsteile Zement, 10 Gewichtsteile Zeolith in Form von Partikeln und 10 Gewichtsteile eines Koaguliermittels vom Typ Kation hinzugefügt werden.

## Revendications

1. Un floculant pour le traitement de l'eau résiduaire, se caractérisant en ce qu'il est constitué à partir de sulphate d'aluminium dans une proportion d'environ 20-40 parts de son poids total, 30-60 parts en poids de sulphate de calcium, 2/3 parts en poids de carbonate métallique alcalin sur le poids du sulfhate d'aluminium, comme contrôleur du pH, 5-15 parts en poids de ciment en particules, comme coagulant, dans lequel on mélange uniformément 5-20 parts en poids de zéolite en particules.

2. Un floculant pour le traitement de l'eau résiduaire, selon la revendication 1, se caractérisant en ce qu'il est constitué par du sulphate d'aluminium dans une quantité d'environ 20-40 parts en poids, 30-60 parts en poids de sulphate de calcium, 2/3 parts en poids de carbonate métallique alcalin sur le poids de sulphate d'aluminium, comme contrôleur du pH, et 5-15 parts en poids de ciment en particules comme coagulant, dans lequel on mélange uniformément entre 5-20 parts en poids de zéolite et 1-30 parts en poids de cation, tous deux en particules.

3. Un flocultant pour le traitement de l'eau résiduaire, selon la revendication 1, se caractérisant en ce qu'il contient 20-40 parts en poids de sulphate d'aluminium, 30-60 parts en poids de sulphate de calcium, environ 2/3 parts en poids de carbonate métallique alcalin sur le poids de sulphate d'aluminium, comme contrôleur du pH, et 5-15 parts en poids de ciment en particules comme coagulant, dans lequel on mélange uniformément entre 5-12 parts en poids de zéolite et 1-30 parts en poids de cation, tous deux en particles.

4. Un flocultant pour le traitement de l'eau résiduaire, selon n'importe laquelle des revendications antérieures, se caractérisant en ce que dans le floculant, 30 parts en poids de celui-ci son mélangées avec du sulphate d'aluminium, 50 parts de sulphate de calcium et 20 parts de carbonate de sodium, en y ajoutant 10 parts de ciment, 10 parts en poids de zéolite en particules, et 10 parts en poids d'un coagulant du type cation.
